# EUROPÄISCHE PATENTANMELDUNG

(11) **EP 1 266 556 A2**
(43) Veröffentlichungstag der Anmeldung: **18.12.2002**
(21) Anmeldenummer: 02006465.5
(22) Anmeldetag: 22.03.2002
(51) Int. Cl.: A01D 17/00

(54) **Kartoffelerntemaschine**

(30) Priorität: 23.03.2001 DE 10116180
(71) Anmelder: Schöpstal Maschinenbau GmbH, 02829 Markersdorf (DE)
(72) Erfinder: Scheibe, Knut Dr., 02827 Görlitz (DE); Firus, Siegfried Dr., 01259 Dresden (DE); Belter, Adolf Dipl.-Ing., 01309 Dresden (DE)
(74) Vertreter: Kailuweit, Frank, Dr. Dipl.-Ing.

(57) **Zusammenfassung**

Die Kartoffelerntemaschine ermöglicht die direkte Einlagerung des Erntegutes in großvolumige Transport- und Lagerbehältnisse. Durch die Minimierung der Anzahl der Umschlagprozesse und die Minimierung der Fallhöhe der Kartoffeln in die für die Lagerung vorgesehenen Behälter erfährt das Erntegut eine schonende Behandlung. Dadurch wird einem vorzeitigen Verderb der Kartoffeln während der Lagerung vorgebeugt.

Die Kartoffelerntemaschine speichert das Emtegut in größeren Mengen selbst, so dass es nicht mehr nötig ist, dass die Kartoffelerntemaschine während des Erntevorgangs ständig von einem Transportfahrzeug begleitet wird, das die Kartoffeln aufnimmt. Zudem kann der Ernteprozess ohne technologische Unterbrechungen quasi kontinuierlich durchgeführt werden. Als Aufnahmebehältnisse kommen vorzugsweise Rollbodenbunker oder Großraum-Lagerkisten zum Einsatz.

Um die Stoßbelastung der geförderten Kartoffeln zu minimieren, wird eine beweglich angeordnete Übergabeeinrichtung zunächst bis zum Boden des zu befüllenden Behälters abgesenkt. Die Adaption der Übergabeeinrichtung an die Höhe des Bodens des Behälters bzw. an die jeweilige Höhe des Kartoffelschüttkegels erfolgt manuell oder mittels einer automatischen Fallhöhenanpassungseinrichtung.

## Beschreibung

Die Erfindung betrifft eine mehrreihig arbeitende, selbstfahrende Kartoffelerntemaschine, die das Erntegut direkt in die für die Lagerung der Kartoffeln vorgesehenen Behälter füllt und so einen schonenden Transport bei gleichzeitiger Minimierung der Anzahl benötigter Umschlagprozesse ermöglicht.

Aus G 89 08 916.2 U1 ist eine Vorrichtung zum Roden von Wurzelfrüchten bekannt, bei der der Bunker ein von der Vorrichtung abkoppelbarer Container ist, damit das Erntegut das Gewicht der Vorrichtung nicht erhöht. Nach der Beschreibung ist die offenbarte Vorrichtung nicht für Kartoffeln geeignet, da das Erntegut aus großer Fallhöhe auf den Containerboden trifft, wodurch es zu Beschädigungen kommen kann, die die Lagerbarkeit von Kartoffeln herabsetzen würde. Dies ist nur bei Früchten, die wie Zuckerrüben alsbald weiterverarbeitet werden, unbedeutend. Zudem verfügt die beschriebene Maschine nicht über die für die Kartoffelernte notwendigen Hauptbaugruppen.

Aus DE 296 13 018 U1 ist eine Kartoffelerntemaschine bekannt, bei der die Dammaufnahmeeinrichtungen mit den nachfolgenden Förderorganen voneinander getrennt an der Aushubschwinge und dem Maschinenhauptrahmen angeordnet sind. Das Ziel dieser Erfindung bestand darin, die durch die starre Anordnung der genannten Einrichtungen bei vorbekannten Maschinen bedingte schlechte Anpassbarkeit an Bodenunebenheiten zu beseitigen.

Aus G 87 13 765.8 U1 ist ein Hackfruchtaufnehmer, insbesondere Rübenaufnehmer mit einem kippbaren Hackfruchttank bekannt, bei dem der obere Teil eines Höhenförderers so schwenkbar ist, dass ein Kippen des Hackfruchttanks ermöglicht wird.

Aus EP 0 417 957 B1 ist eine Kartoffelerntemaschine bekannt, bei der eine Überladung der Kartoffeln auf ein nebenherfahrendes Transportfahrzeug stattfindet. Dabei ist der Überladeförderer so konstruiert, dass die Befüllung des nebenherfahrenden Transportfahrzeuges ebenso möglich ist, wie die Ablage der gerodeten Kartoffeln zwischen zwei benachbarte Dämme. Bei einem späteren Rodevorgang können ungerodete und gerodete (abgelegte) Kartoffeln in einer Durchfahrt aufgenommen werden. Dies entspricht einem weithin praktizierten Ernteverfahren.

Aus DD 246 912 A1 ist eine technische Lösung für eine Fallbremse für das Erntegut zur Vermeidung von Quetschungen und Beschädigungen bekannt. Die Abbremsung erfolgt hierbei über eine seitliche Ableitung der Kartoffeln; eine Breitverteilung des Schüttkegels erfolgt jedoch nicht, so dass eine optimale Befüllung des Aufnahmebehälters nicht möglich ist.

Ausgehend von diesem Stand der Technik stellt sich die Erfindung die Aufgabe, eine Kartoffelerntemaschine zu schaffen, die das Erntegut unter Vermeidung von Quetschungen oder Beschädigungen direkt in die für die Lagerung vorgesehenen Behälter füllt, wodurch Umschlagprozesse eingespart werden und wobei durch schonende Behandlung des Ernteguts einem vorzeitigen Verderb während der Lagerung vorgebeugt wird.

Die Aufgabe wird gelöst durch eine Kartoffelerntemaschine, bei der die geernteten Kartoffeln direkt auf der Maschine entweder in einen oder mehrere Bunker mit großem Fassungsvermögen oder in einen oder mehrere Behälter, die zur Lagerung der Kartoffeln verwendet werden können, gefüllt werden.

Die erfindungsgemäße Kartoffelerntemaschine speichert das Erntegut in größeren Mengen selbst, so dass es nicht mehr nötig ist, dass wie bei bekannten Lösungen die Kartoffelerntemaschine während des Erntevorgangs ständig von einem Transportfahrzeug begleitet wird, das die Kartoffeln aufnimmt. Zudem kann der Ernteprozess ohne technologische Unterbrechungen quasi kontinuierlich durchgeführt werden.

Bei der Variante mit Bunkern wird deren Inhalt diskontinuierlich an ein Transportfahrzeug übergeben, wenn das Fassungsvermögen des oder der Bunker erschöpft ist. Bei der Variante mit Lagerbehältern werden die Behälter samt Erntegut auf ein Transportfahrzeug umgeladen, wenn sie gefüllt sind.

Die zweite Variante hat den zusätzlichen Vorteil, dass die Kartoffeln nicht noch einmal bewegt werden müssen, wodurch eine Rationalisierung des gesamten Ernte-, Umschlagund Lagerungsprozesses erzielt wird und darüber hinaus das Erntegut schonender behandelt und eine erhöhte Ausbeute erzielt wird.

Die Kartoffelerntemaschine ist vorteilhaft in zwei Funktionssektionen unterteilt.

Die Funktionssektion A beinhaltet eine vordere Lenkachse und eine hintere Stützachse, das Fahrerhaus und die für eine Kartoffelerntemaschine bekannten Funktionsbaugruppen Krautschläger, Dammaufnahmevorrichtung, Absiebvorrichtung, Krautabscheidervorrichtung, Höhenförderer, Kluten- bzw. Steintrennbaugruppe, einen Handverlesearbeitsplatz und ein Verleseband mit beweglich angeordnetem Übergabeende.

Die Funktionssektion B ist nach dem bekannten Aufsattelprinzip mit der Funktionssektion A verbunden und in einem Drehpunkt über der hinteren Stützachse der Funktionssektion A drehbar angelenkt. Sie besteht aus einem Rahmen mit mindestens einer angetriebenen Achse, dem Motor und einem mit dem Rahmen verbundenen Zwischenrahmen, auf dem unterschiedliche Behälter angeordnet werden können, die die geernteten Kartoffeln während des Rodevorganges aufnehmen.

Dabei kommen vorzugsweise die Behältervarianten Rollbodenbunker oder Großraum-Lagerkiste zur Anwendung.

Der Motor einschließlich der zugehörigen energetischen Systeme (Hydraulik, Elektrik) kann wahlweise in der Funktionssektion A oder B eingeordnet sein.

In Abhängigkeit von den Einsatzbedingungen und Bodenverhältnissen können die Laufräder aller Achsen angetrieben und/oder lenkbar sein.
Durch die konstruktive Gliederung der Kartoffelerntemaschine in zwei Funktionssektionen kann bei Instandsetzungen die funktionsfähige Sektion weiter genutzt werden. Die Funktionssektion A mit den üblichen Baugruppen für die Aufnahme des Erntegutes kann gegebenenfalls im Solobetrieb mit Transportfahrzeugen für die konventionelle Ernte von minderwertigen Kartoffeln genutzt werden.

Nach dem Befüllen der Behälter mit den geernteten Kartoffeln erfolgt die Übergabe dieser Behälter auf ein Transportfahrzeug. Bei der Variante mit Rollbodenbunker werden die gesammelten Kartoffeln auf das Transportfahrzeug übergeben. Bei der Variante mit Großraum-Lagerkisten werden die gefüllten Behälter mit einem auf der Erntemaschine installierten Ladekran auf das Transportfahrzeug übergeben. Letztere Variante hat den Vorteil, dass die gefüllte Großraum-Lagerkiste ohne weitere Bewegung der beschädigungsempfindlichen Kartoffeln in ein Kartoffellagerhaus eingestellt werden kann.

Die Aufnahme des Erntegutes erfolgt mit Hilfe der Baugruppen der Funktionssektion A in bekannter Weise. Nach der manuellen Korrektur fehlgeleiteter Kartoffeln oder Beimengungen auf dem Handverlesearbeitsplatz werden die Kartoffeln über das Verleseband mittels einer beweglich angeordneten Übergabeeinheit in den ersten Rollbodenbunker bzw. Großraum-Lagerbehälter gefördert.

Um die Stoßbelastung der geförderten Kartoffeln zu minimieren, wird die beweglich angeordnete Übergabeeinheit zunächst bis zum Boden des zu befüllenden Behälters abgesenkt. Die Adaption der Übergabeeinrichtung an die Höhe des Bodens des Behälters bzw. an die jeweilige Höhe des Kartoffelschüttkegels erfolgt manuell oder in einer bevorzugten Weiterbildung der Erfindung mittels einer automatischen Fallhöhenanpassungseinrichtung.

Die Fallhöhenanpassungseinrichtung erfasst über einen Berührungssensor oder einen berührungslosen Sensor den aktuellen Füllstand der Großraum-Lagerkiste. Kommt es bei zunehmendem Füllstand der Großraum-Lagerkiste zur Berührung des Berührungssensors mit den Kartoffeln bzw. wird der eingestellte Sollwert des Abstands des berührungslosen Sensors zu den Kartoffeln unterschritten, so wird die Höhe des Endes des Bunkerbefüllbandes über einen Regelkreis und die zur Höhenverstellung vorgesehenen Elemente automatisch angepasst, so dass die Kartoffeln stets möglichst nahe über dem sich bildenden Kartoffelschüttkegel das Bunkerbefüllband verlassen.

Zur optimalen Befüllung des Behälters mit Kartoffeln kann am Ende der Übergabeeinrichtung eine Vorrichtung zur gleichmäßigen Verteilung des Ernteguts vorgesehen sein. Dadurch wird verhindert, dass die Kartoffeln alle in dem gleichen, eng begrenzten Bereich des Behälters auftreffen, wodurch eine Entmischung von Erntegut und zwangsläufig mitgeführtem Erdreich vermieden wird. Anderenfalls würde sich in diesem Bereich des Auftreffens eine Anhäufung von in der Regel feuchter Erde bilden, die sich beim Auftreffen der Kartoffeln von diesen löst. Damit wäre in dem Behälter eine Fäulnisquelle vorhanden, die insbesondere beim direkten Befüllen von Großraum-Lagerkisten unbedingt vermieden werden muss, da die Kartoffeln in diesen über längere Zeiträume gelagert werden und an diesen Stellen eine wesentlich schlechtere Belüftung der Lagerkartoffeln erfolgt.

Nach dem Abschluss des Befüllvorgangs des ersten Rollbodenbunkers oder Großraum-Lagerbehälters beginnt das Befüllen des nächsten, ebenfalls auf der Maschine installierten Behälters. Dazu wird das Bunkerbefüllband in eine solche Stellung bewegt, dass eine Bewegung bzw. ein Austausch der auf der Maschine befindlichen Behälter nicht behindert und der Erntevorgang der Kartoffelerntemaschine nicht unterbrochen wird.

Dann wird die beweglich angeordnete Übergabeeinheit über den nächsten Behälter geschwenkt und dort bis zum Boden des zu befüllenden Behälters abgesenkt. Um eine möglichst große Anzahl von Behältern installieren und befüllen zu können, kann außer der Schwenkbarkeit der Übergabeeinheit auch eine Beweglichkeit der Behälter vorgesehen sein, so dass der jeweils zu befüllende Behälter zunächst in eine für die Übergabeeinheit gut erreichbare Position gebracht werden kann, bevor die Übergabeeinheit in den Behälter hineingeschwenkt wird und das Befüllen beginnt.

Sind alle Behälter gefüllt, so wird ihr Inhalt auf ein Transportfahrzeug übergeben oder sie werden auf ein Transportfahrzeug umgeladen und durch leere Behälter ersetzt.

Kommen Rollbodenbunker zum Einsatz, so werden diese durch dafür an der Kartoffelerntemaschine vorgesehene Hubeinrichtungen angehoben. Anschließend werden die Kartoffeln über die Rollböden zur Seite der Maschine befördert, wo sie auf ein bereitstehendes Transportfahrzeug bzw. in Lagerkisten auf diesem Fahrzeug fallen. Anschließend werden die geleerten Bunker wieder abgesenkt und die Ernte kann fortgesetzt werden.

Kommen Großraum-Lagerkisten zum Einsatz, so besteht ein Vorteil darin, dass die Kartoffeln vor ihrer Einlagerung nicht noch einmal umgeschlagen werden müssen. In diesem Fall werden daher die auf der Maschine lösbar installierten Behälter mitsamt ihrem Inhalt mit Hilfe eines zu der Maschine gehörigen oder von außen bereitgestellten Ladekrans auf ein bereitstehendes Transportfahrzeug umgeladen und anschließend durch leere Großraum-Lagerkisten ersetzt. Danach kann die Ernte fortgesetzt werden.

Anhand von Ausführungsbeispielen wird die Erfindung näher erläutert. Dabei zeigen
- **Fig. 1**: Kartoffelerntemaschine mit den beiden Funktionssektionen A und B
- **Fig. 2**: Kartoffelerntemaschine mit den hauptsächlichen Funktionsbaugruppen
- **Fig. 3**: Kartoffelerntemaschine mit Raupenfahrwerk
- **Fig. 4**: Kartoffelerntemaschine mit 2 großen Rollbodenbunkern (Draufsicht) und Transportfahrzeug
- **Fig. 5**: Kartoffelerntemaschine mit 2 großen Rollbodenbunkern (Seitenansicht)
- **Fig. 6**: Befüllvorrichtung für zwei Rollbodenbunker in einer Beladestellung
- **Fig. 7**: Befüllvorrichtung für zwei Rollbodenbunker in einer anderen Beladestellung
- **Fig. 8**: Befüllvorrichtung für zwei Rollbodenbunker in der Bunkerentleerposition
- **Fig. 9**: Kartoffelerntemaschine mit Großraum-Lagerbehältem und Ladekran (Draufsicht)
- **Fig. 10**: Kartoffelerntemaschine mit Großraum-Lagerbehältern und Befüllvorrichtung
- **Fig. 11**: Kartoffelverteilvorrichtung - Verteilvariante 1
- **Fig. 12**: Kartoffelverteilvorrichtung - Verteilvariante 2
- **Fig. 13**: Kartoffelverteilvorrichtung - Verteilvariante 3

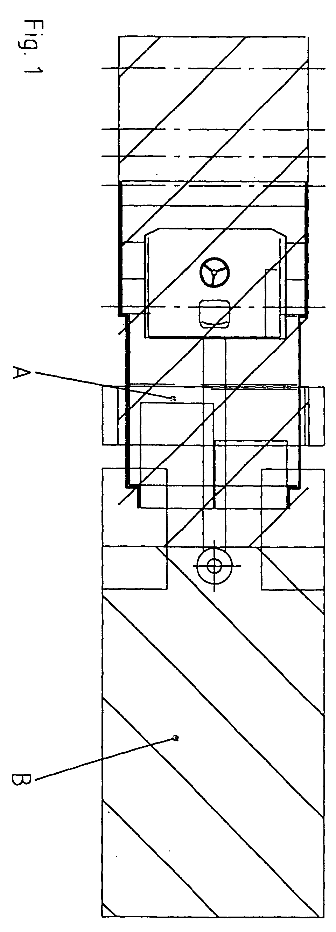

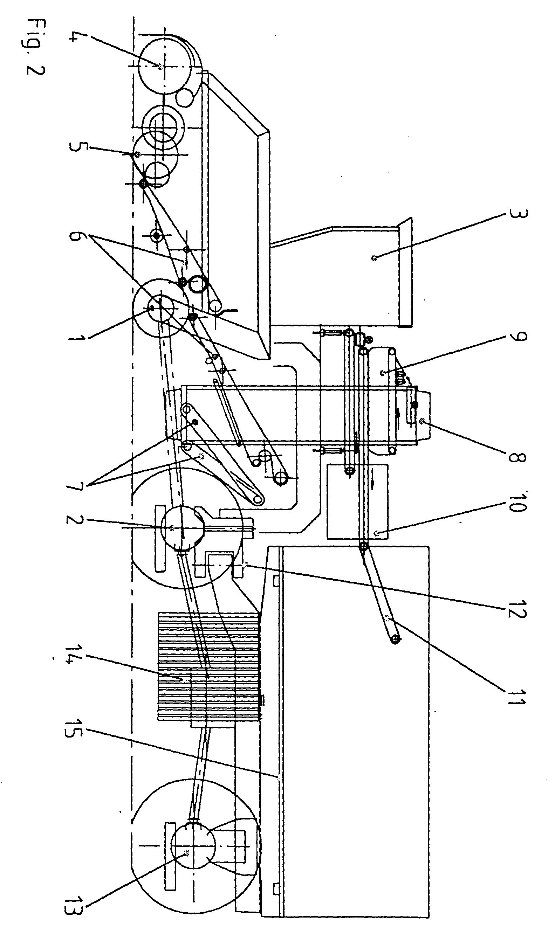

**Fig. 1** zeigt den prinzipiellen Aufbau der erfindungsgemäßen Kartoffelerntemaschine in einer Draufsicht. In **Fig. 2** ist die gleiche Maschine in einer Seitenansicht dargestellt. Die Maschine besteht aus den Funktionssektionen A und B.

Die Funktionssektion A besteht aus einer vorderen Lenkachse (1) und einer hinteren Stützachse (2), dem Fahrerhaus (3) und den Funktionsbaugruppen Krautschläger (4), Dammaufnahmevorrichtung (5), Absiebvorrichtung (6), Krautabscheidervorrichtung (7), Höhenförderer (8), Kluten- bzw. Steintrennbaugruppe (9), einem Handverlesearbeitsplatz (10) und einem Verleseband mit beweglich angeordnetem Übergabeende (11).

Die Funktionssektion B ist nach dem Aufsattelprinzip mit der Funktionssektion A verbunden und in einem Drehpunkt (12) über der hinteren Stützachse (2) der Funktionssektion A drehbar angelenkt. Sie besteht aus einem Rahmen mit einer angetriebenen hinteren Triebachse (13), dem Motor (14) und einem mit dem Rahmen verbundenen Zwischenrahmen (15), auf dem unterschiedliche Behälter angeordnet werden können, die die geernteten Kartoffeln während des Rodevorganges aufnehmen.

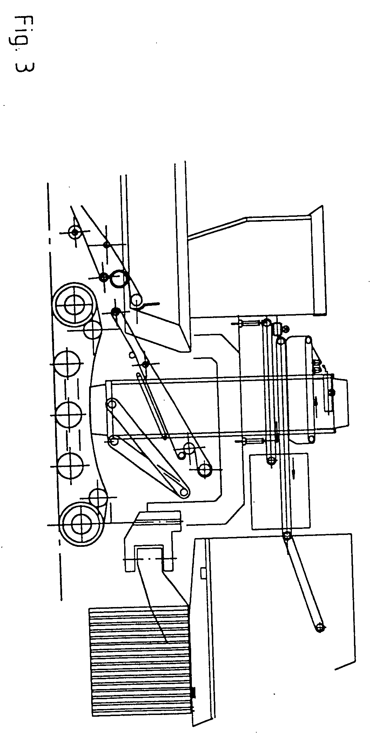

**Fig. 3** zeigt eine Variante der bevorzugten Ausführungsform, bei der die vordere Lenkachse (1) und die hintere Stützachse (2) der Funktionssektion A durch ein Raupenfahrwerk ersetzt sind. Diese Variante ist besonders vorteilhaft einzusetzen, wenn die Bodenverdichtung minimiert werden soll oder wenn das Erdreich in der Zeit vor der Ernte aufgrund hoher Niederschlagsmengen viel Feuchtigkeit aufgenommen hat.

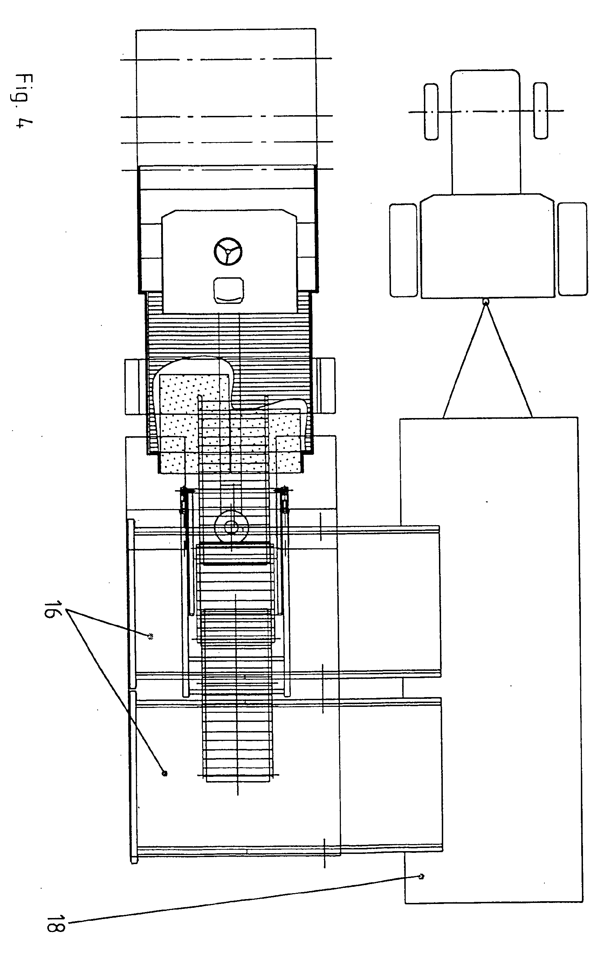

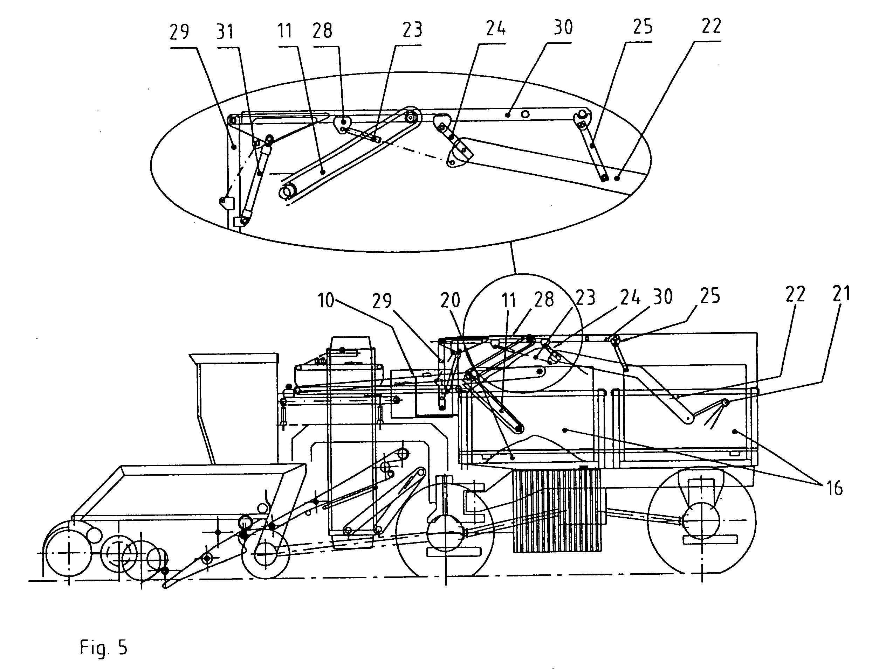

In **Fig. 4** ist die erfindungsgemäße Kartoffelerntemaschine in der Variante mit Rollbodenbunkern (16) in der Draufsicht und in **Fig. 5** in einer Seitenansicht dargestellt.

Zur Sammlung der geernteten Kartoffeln bei dieser Variante werden mindestens zwei Rollbodenbunker (16) bekannter Bauart auf der Maschine hintereinander angeordnet. Nach der Handkorrektur der fehlgeleiteten Kartoffeln bzw. Beimengungen auf dem Handverlesearbeitsplatz (10) werden die Kartoffeln zur Befüllung des ersten Rollbodenbunkers (16) über das Verleseband mit beweglich angeordnetem Übergabeende (11) in diesen gefördert.

Die im Interesse geringer Stoßbelastung der Kartoffeln erforderliche kontinuierliche Anpassung der Fallhöhe der Kartoffeln von der Kartoffelverteilvorrichtung zum Boden des Bunkers bzw. zum Kartoffelschüttkegel erfolgt in der bevorzugten Ausführungsform durch eine Vorrichtung zur automatischen Fallhöhenanpassung (21). Diese Vorrichtung ist am Bunkerbefüllband (22) befestigt und erfasst über einen Berührungssensor den aktuellen Füllstand des Bunkers. Kommt es bei zunehmendem Füllstand des Bunkers zur Berührung des Sensors mit den Kartoffeln, so wird die Höhe des Endes des Bunkerbefüllbandes (22) über einen Regelkreis und die zur Höhenverstellung vorgesehenen Elemente automatisch angepaßt, so dass die Kartoffeln stets möglichst nahe über dem sich bildenden Kartoffelschüttkegel (20) das Bunkerbefüllband (22) verlassen.

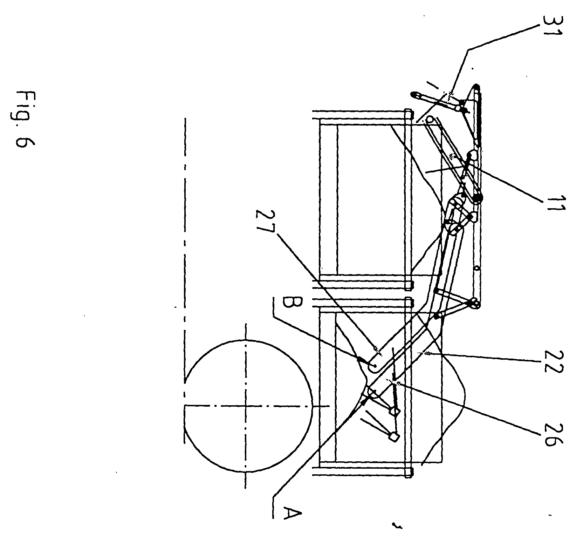

Nach Abschluss des Befüllvorganges für den ersten Rollbodenbunker (16) bleibt das Verleseband mit beweglich angeordnetem Übergabeende (11) in der oberen Befüllstellung, und es wird das Bunkerbefüllband (22) über die Bewegung des Zylinders 1 (23), die kurze Koppel (24) und die lange Koppel (25) von der in **Fig. 6** dargestellten Beladestellung A (26) in die Beladestellung B (27) unter das Verleseband mit beweglich angeordnetem Übergabeende (11) geschwenkt.

Das Bunkerbefüllband (22) wird über eine Auslegerkonstruktion (28) gehalten und geführt. Die Auslegerkonstruktion (28) besteht aus dem Pfosten (29) und dem Ausleger (30). Die Auslegerkonstruktion (28) ist beidseitig am Verleseband mit beweglich angeordnetem Übergabeteil (11) und Bunkerbefüllband (22) angeordnet und wird über den Pfosten (29) fest mit dem Hauptrahmen der Funktionssektion A der Kartoffelerntemaschine verbunden.

Der Ausleger (30) wird zur Befüllung des zweiten Rollbodenbunker (16) mittels des Zylinders 2 (31) bewegt. Die Kartoffeln gelangen jetzt in den zweiten Rollbodenbunker (16), und dieser wird analog zum ersten gefüllt.
Dieser Befüllvorgang erfolgt wie beim ersten Rollbodenbunker (16) über eine automatische Fallhöhenanpassung (21), die sicherstellt, dass die Kartoffeln mit einer niedrigen Fallhöhe auf den Bunkerboden bzw. auf die schon abgelegten Kartoffeln übergeben werden.

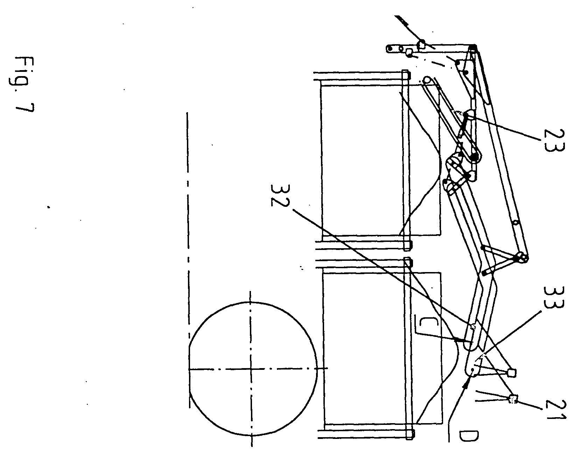

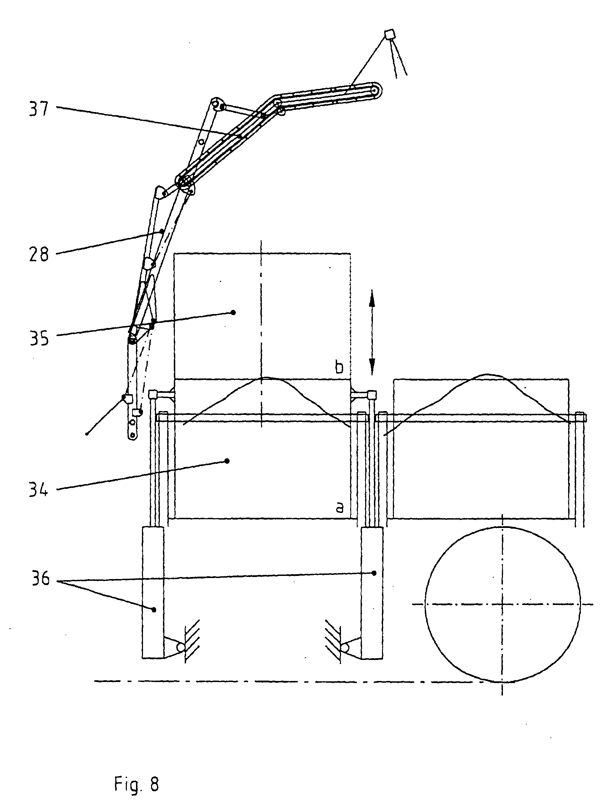

Nach Abschluss des Befüllvorganges für den zweiten Rollbodenbunker (16) wird die Kartoffelförderung gestoppt und anschließend, wie in **Fig. 7** dargestellt, das Bunkerbefüllband (22) von der Beladestellung C (32) in die Beladestellung D (33) geschwenkt. Da die beiden Rollbodenbunker (16) zur Übergabe der Kartoffeln auf ein Transportfahrzeug (18) mittels der beiden Bunkerzylinder (36), wie in **Fig. 8** dargestellt, von der Bunkerposition a (34) in die Bunkerposition b (35) gebracht werden müssen, ist es erforderlich, die Auslegerkonstruktion (28) mit dem Bunkerbefüllband (22) in die Bunkerentleerposition (37) zu bringen.

Nach dem Entleeren der beiden Rollbodenbunker (16) werden diese wieder in die Bunkerposition a (34) gebracht, das Bunkerbefüllband (22) in die Beladestellung A (26) zurückgeschwenkt und das Verleseband mit beweglich angeordnetem Übergabeende (11) in den Rollbodenbunker (16) in die untere Befüllstellung abgesenkt.
Der Befüllvorgang kann erneut beginnen.

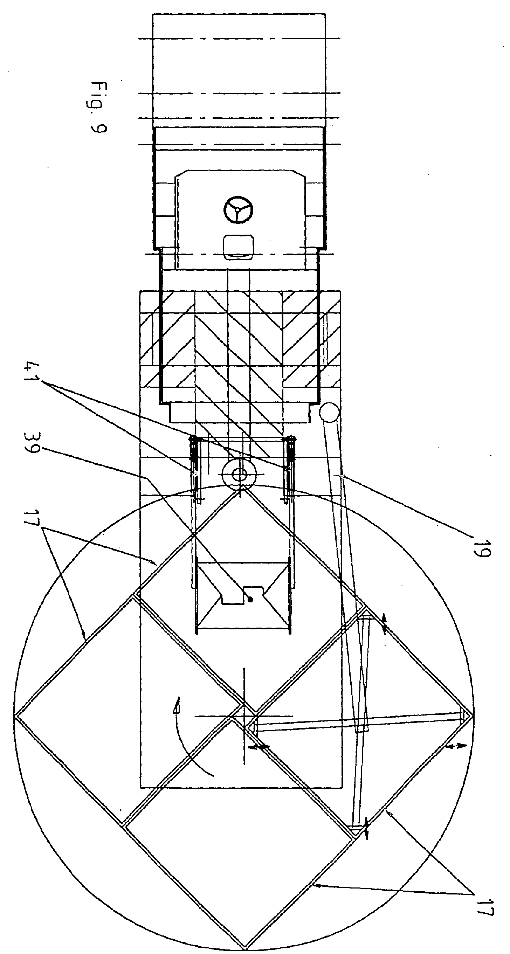

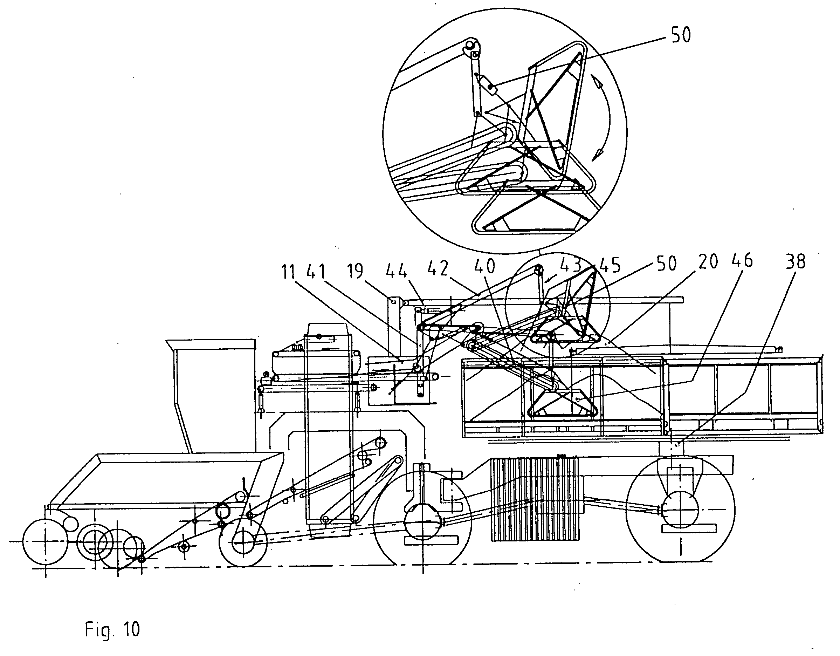

In einer weiteren bevorzugten Ausführungsform der erfindungsgemäßen Kartoffelerntemaschine werden die Kartoffeln direkt in eine Anzahl auswechselbar auf der Maschine installierter standardisierter Großraum-Lagerkisten gefüllt. In **Fig. 9** ist die erfindungsgemäße Kartoffelerntemaschine in der Variante mit Großraum-Lagerkisten in der Draufsicht dargestellt, **Fig. 10** zeigt die gleiche Maschine in einer Seitenansicht.

Zur Sammlung der geernteten Kartoffeln bei der Maschine der bevorzugten Ausführungsform wird der Zwischenrahmen (15) der Funktionssektion B mit einem Drehgestell (38) ausgerüstet, welches vier Großraum-Lagerkisten (17) aufnimmt. Die Großraum-Lagerkisten (17) werden nacheinander gefüllt, ohne dass der Rodevorgang der Erntemaschine unterbrochen werden muss. Nach dem Befüllen der ersten Großraum-Lagerkiste (17) wird durch Drehen des Drehgestells (38) an der Befüllstelle (39) eine leere Großraum-Lagerkiste (17) bereitgestellt.

Nach der Handkorrektur der fehlgeleiteten Kartoffeln bzw. Beimengungen auf dem Verleseband mit beweglich angeordnetem Übergabeende (11) werden die Kartoffeln auf ein Ablageband (40) übergeben. Dieses Ablageband (40) ist an einer beweglichen Hubarmkonstruktion befestigt, die aus einem Ständer (41), einer Koppel (42) und einem Arm (43) besteht. Der Ständer (41) ist beidseitig neben dem Verleseband mit beweglich angeordnetem Übergabeende (11) angeordnet und wird fest mit dem Hauptrahmen der Funktionssektion A der Kartoffelerntemaschine verbunden. Die Koppel (42) ist drehbar am Ständer (41) gelagert und wird über Hydraulikzylinder (44) bewegt. Der Arm (43) ist an der Koppel (42) drehbar angeordnet und nimmt das Ablageband (40) am Abgabeende auf, so dass dieses über die bewegliche Hubarmkonstruktion in Abhängigkeit vom Befüllstand in der Großraum-Lagerkiste (17) nach oben bzw. nach unten bewegt werden kann.

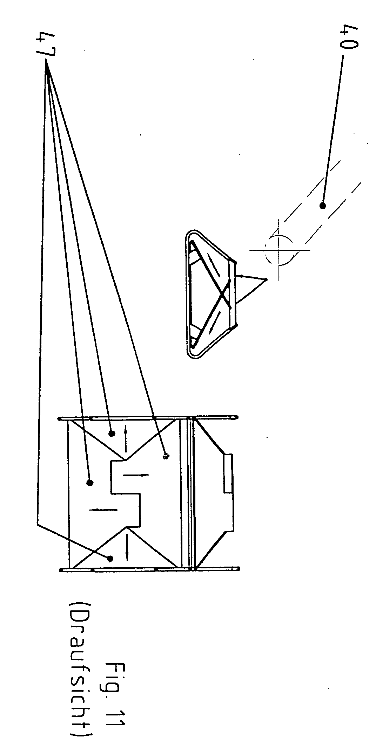

Zur optimalen Verteilung der Kartoffeln in den Behältern und zur Vermeidung einer Entmischung von Erntegut und mitgeführtem Erdreich und der daraus resultierenden Entstehung einer Fäulnisquelle werden die Kartoffeln vom Bunkerbefüllband (22) an eine in **Fig. 11** dargestellte Kartoffelverteilvorrichtung (46) weitergegeben. Diese ist annähernd pyramidenförmig ausgebildet, so dass ankommende Kartoffeln über die Abrollflächen (47) über den gesamten Boden des Rollbodenbunkers (16) verteilt werden.

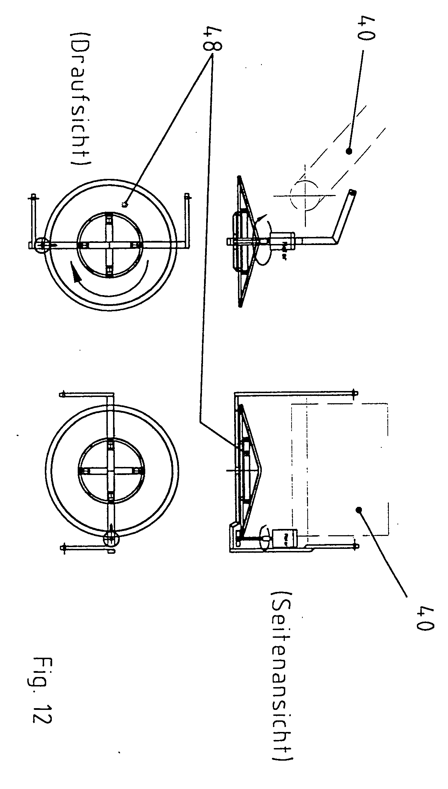

In einer weiteren bevorzugten Ausführungsform kommt statt der Kartoffelverteilvorrichtung (46) ein in **Fig. 12** dargestellter rotierender Verteilkegel (48) zum Einsatz.

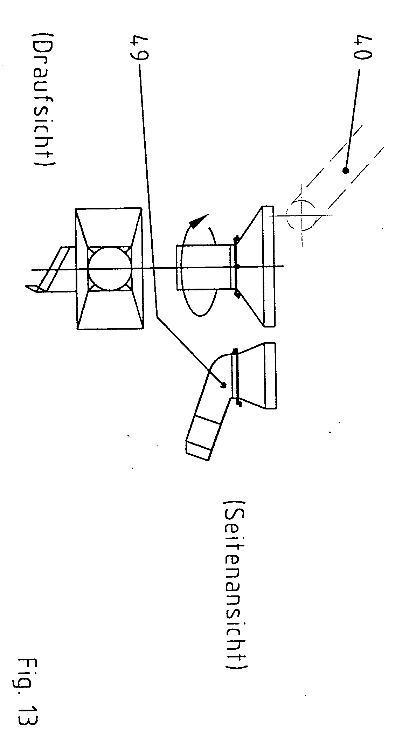

In einer weiteren bevorzugten Ausführungsform wird statt der Kartoffelverteilvorrichtung (46) ein in **Fig. 13** dargestellter Trichter mit rotierendem Auslauf (49) verwendet.

Der rotierende Verteilkegel (48) und der Trichter mit rotierendem Auslauf (49) haben die gleiche Funktion wie die Kartoffelverteilvorrichtung (46).

An einer Parallelogrammführung (45), die am Abgabeende des Ablagebandes (40) drehbar geführt wird, ist die Kartoffelverteilvorrichtung (46), der rotierende Verteilkegel (48) oder der Trichter mit rotierendem Auslauf (49) so befestigt, dass diese bei Aufwärtsbewegung des Ablagebandes (40) stets horizontal ausgerichtet ist.

Der rotierende Verteilkegel (48) und der Trichter mit rotierendem Auslauf (49) haben die gleiche Funktion wie die Kartoffelverteilvorrichtung (46).

Zum Abschluss des Befüllvorganges der Großraum-Lagerkiste (17) ist es möglich - im Interesse eines maximalen Befüllgrades - die Kartoffelverteilvorrichtung (46), den rotierenden Verteilkegel (48) oder den Trichter mit rotierendem Auslauf (49) mit einem Stellorgan (50) aus der horizontalen Lage herauszuschwenken.

Die im Interesse geringer Stoßbelastung der Kartoffeln erforderliche kontinuierliche Anpassung der Fallhöhe der Kartoffeln von der Kartoffelverteilvorrichtung (46) zum Boden der Großraum-Lagerkiste (17) bzw. zum Kartoffelschüttkegel (20) erfolgt in gleicher Weise wie bei der Ausführungsform mit Rollbodenbunkern.

Der Wechsel von einem gefüllten zu einem leeren Behälter erfolgt dergestalt, dass die gesamte Anordnung der auf der Funktionssektion B angebrachten Großraum-Lagerkisten (17) um die Drehachse des Drehgestells (38) rotiert wird, so dass der nächste zu befüllende Behälter in den Bereich des Endes des Ablagebands (40) gelangt und anschließend befüllt werden kann.

Sind alle auf der Maschine installierten Großraum-Lagerkisten (17) gefüllt, so werden die gefüllten Behälter mitsamt ihrem Inhalt unter Verwendung des zu diesem Zweck ebenfalls an der Kartoffelerntemaschine angebrachten Ladekrans (19) vom Drehgestell (38) gehoben und auf einem bereitgestellten Transportfahrzeug abgestellt. Danach werden ebenfalls mit Hilfe des Ladekrans (19) leere Großraum-Lagerkisten (17) auf die Kartoffelerntemaschine gehoben, auf dem Drehgestell (38) befestigt und anschließend die Ernte fortgesetzt.

### Übersicht verwendeter Bezugszeichen

- A: Funktionssektion A
- B: Funktionssektion B

- 1.: Vordere Lenkachse
- 2.: Hintere Stützachse
- 3.: Fahrerhaus
- 4.: Krautschläger
- 5.: Dammaufnahmevorrichtung
- 6.: Absiebvorrichtung
- 7.: Krautabscheidervorrichtung
- 8.: Höhenförderer
- 9.: Kluten-bzw. Steintrennbaugruppe
- 10.: Handverlesearbeitsplatz
- 11.: Verleseband mit beweglich angeordnetem Übergabeende
- 12.: Kopplungseinrichtung (Drehpunkt)
- 13.: Hintere Triebachse
- 14.: Motor
- 15.: Zwischenrahmen
- 16.: Rollbodenbunker
- 17.: Großraum-Lagerkiste
- 18.: Transportfahrzeug
- 19.: Ladekran
- 20.: Kartoffelschüttkegel
- 21.: Automatische Fallhöhenanpassung
- 22.: Bunkerbefüllband
- 23.: Zylinder 1
- 24.: Kurze Koppel
- 25.: Lange Koppel
- 26.: Beladestellung A
- 27.: Beladestellung B
- 28.: Auslegerkonstruktion
- 29.: Pfosten
- 30.: Ausleger
- 31.: Zylinder 2
- 32.: Beladestellung C
- 33.: Beladestellung D
- 34.: Bunkerposition a
- 35.: Bunkerposition b
- 36.: Bunkerzylinder
- 37.: Bunkerentleerposition
- 38.: Drehgestell
- 39.: Befüllstelle
- 40.: Ablageband
- 41.: Ständer
- 42.: Koppel
- 43.: Arm
- 44.: Hydraulikzylinder
- 45.: Parallelogramm
- 46.: Kartoffelverteilvorrichtung
- 47.: Abrollflächen
- 48.: Rotierender Verteilkegel
- 49.: Rotierender Auslauf
- 50.: Stellorgan

## Patentansprüche

1. Mehrreihig arbeitende, selbstfahrende Kartoffelerntemaschine, die das Erntegut in einen oder mehrere, direkt auf der Kartoffelerntemaschine befindliche großvolumige Aufnahmebehälter übergibt, wobei das Erntegut mittels verstellbarer Fördereinrichtungen und Verteileinrichtungen in eine Position über dem Aufnahmebehälter transportiert und aus minimaler Höhe in den Aufnahmebehälter übergeben wird.

2. Kartoffelerntemaschine nach Anspruch 1,
**dadurch gekennzeichnet, dass**
mindestens zwei abnehmbare Aufnahmebehälter auf der Kartoffelerntemaschine angeordnet sind

3. Kartoffelerntemaschine nach Anspruch 1,
**dadurch gekennzeichnet, dass**
der Aufnahmebehälter ein auf der Kartoffelerntemaschine angeordneter, anhebbarer und mittels Rollboden entleerbarer Rollbodenbunker ist.

4. Kartoffelerntemaschine nach Anspruch 1,
**dadurch gekennzeichnet, dass**
der Aufnahmebehälter ein für die Langzeitlagerung von Kartoffeln geeigneter, abnehmbarer Behälter ist.

5. Kartoffelerntemaschine nach Anspruch 1 oder 4,
**dadurch gekennzeichnet, dass**
der Aufnahmebehälter eine stapelbare Großraum-Lagerkiste ist.

6. Kartoffelerntemaschine nach einem der Ansprüche 1 bis 5,
**dadurch gekennzeichnet, dass**
die Aufnahmebehälter auf der Kartoffelerntemaschine beweglich angeordnet sind.

7. Kartoffelerntemaschine nach Anspruch 6,
**dadurch gekennzeichnet, dass**
die Aufnahmebehälter drehbar oder schwenkbar angeordnet sind.

8. Kartoffelerntemaschine nach Anspruch 6,
**dadurch gekennzeichnet, dass**
die Aufnahmebehälter axial verschiebbar angeordnet sind.

9. Kartoffelerntemaschine nach Anspruch 1,
**dadurch gekennzeichnet, dass**
die Funktionssektionen A und/oder B auf einem Raupenfahrwerk angeordnet sind.

10. Kartoffelerntemaschine nach Anspruch 1,
**dadurch gekennzeichnet, dass**
die Anpassung der Fallhöhe der Kartoffeln von der Kartoffelverteilvorrichtung zum Boden der Großraum-Lagerkiste bzw. zum Kartoffelschüttkegel über eine Vorrichtung zur Fallhöhenanpassung realisiert wird.

11. Kartoffelerntemaschine nach Anspruch 10,
**dadurch gekennzeichnet, dass**
die Vorrichtung zur Fallhöhenanpassung am Bunkerbefüllband angeordnet ist.

12. Kartoffelerntemaschine nach Anspruch 1, 10 oder 11,
**dadurch gekennzeichnet, dass**
die Erfassung des Füllstandes des Aufnahmebehälters über einen Berührungssensor erfolgt.

13. Kartoffelerntemaschine nach Anspruch 1, 11 oder 12,
**dadurch gekennzeichnet, dass**
der Berührungssensor den Abstand zwischen Bunkerbefüllband und dem Boden des Aufnahmebehälters bzw. dem Kartoffelschüttkegel mit optischen, pneumatischen und/oder mechanischen Mitteln detektiert.

14. Kartoffelerntemaschine nach Anspruch 1 oder 2,
**dadurch gekennzeichnet, dass**
die verstellbare Fördereinrichtung aus einem Verleseband mit beweglich angeordnetem Übergabeende (11) und einem Bunkerbefüllband (22) besteht.

15. Kartoffelerntemaschine nach Anspruch 14,
**dadurch gekennzeichnet, dass**
dass das Bunkerbefüllband (22) über eine Auslegerkonstruktion (28) gehalten und geführt wird.

16. Kartoffelerntemaschine nach Anspruch 15,
**dadurch gekennzeichnet, dass**
dass die Auslegerkonstruktion (28) aus einem Pfosten (29) und einem Ausleger (30) besteht, wobei die Auslegerkonstruktion (28) beidseitig am Verleseband mit beweglich angeordnetem Übergabeteil (11) und Bunkerbefüllband (22) angeordnet und über den Pfosten (29) mit dem Hauptrahmen der Funktionssektion A der Kartoffelerntemaschine verbunden ist.

17. Kartoffelerntemaschine nach Anspruch 15,
**dadurch gekennzeichnet, dass**
nach Abschluss des Befüllvorganges das Verleseband mit beweglich angeordnetem Übergabeende (11) in die obere Befüllstellung verfahrbar und das Bunkerbefüllband (22) über die Bewegung des Zylinders (23), die kurze Koppel (24) und die lange Koppel (25) unter das Verleseband mit beweglich angeordnetem Übergabeende (11) schwenkbar ist.

18. Kartoffelerntemaschine nach Anspruch 1, 4 oder 5,
**dadurch gekennzeichnet, dass**
die abnehmbaren Aufnahmebehälter auf einem Drehgestell (38) angeordnet sind, dass auf einem Zwischenrahmen (15) der Funktionssektion B gelagert ist.

19. Kartoffelerntemaschine nach Anspruch 1, 4 oder 5,
**dadurch gekennzeichnet, dass**
das Erntegut über das Verleseband mit beweglich angeordnetem Übergabeende (11) auf ein Ablageband (40) übergeben wird, wobei das Ablageband (40) an einer beweglichen Hubarmkonstruktion befestigt ist, die aus einem Ständer (41), einer Koppel (42) und einem Arm (43) besteht, wobei der Ständer (41) beidseitig neben dem Verleseband angeordnet und fest mit dem Hauptrahmen der Funktionssektion A der Kartoffelerntemaschine verbunden ist.

20. Kartoffelerntemaschine nach Anspruch 19,
**dadurch gekennzeichnet, dass**
die Koppel (42) drehbar am Ständer (41) gelagert und über einen Hydraulikzylinder (44) bewegbar ist.

21. Kartoffelerntemaschine nach Anspruch 1,
**dadurch gekennzeichnet, dass**
die Kartoffelverteileinrichtung im wesentlichen kegel- oder pyramidenförmig ausgebildet ist, so dass die ankommenden Kartoffeln gleichförmig über die Abrollflächen (47) verteilt werden.

22. Kartoffelerntemaschine nach Anspruch 1,
**dadurch gekennzeichnet, dass**
die Kartoffelverteileinrichtung als rotierender Verteilkegel (48) ausgebildet ist.

23. Kartoffelerntemaschine nach Anspruch 1,
**dadurch gekennzeichnet, dass**
die Kartoffelverteileinrichtung als Trichter mit rotierendem Auslauf (49) ausgebildet ist.

24. Kartoffelerntemaschine nach einem der Ansprüche 1 oder 21 bis 23,
**dadurch gekennzeichnet, dass**
die Kartoffelverteilvorrichtung, der rotierende Verteilkegel (48) oder der Trichter mit rotierendem Auslauf (49) an einer Parallelogrammführung (45) am Abgabeende des Ablagebandes (40) drehbar derart geführt ist, dass diese bei Aufwärtsbewegung des Ablagebandes (40) im wesentlichen horizontal ausgerichtet ist.

25. Kartoffelerntemaschine nach einem der Ansprüche 1 oder 21 bis 23,
**dadurch gekennzeichnet, dass**
die Kartoffelverteilvorrichtung, der rotierende Verteilkegel (48) oder der Trichter mit rotierendem Auslauf (49) nach Abschluss des Befüllvorganges des Aufnahmebehälters mit einem Stellorgan (50) aus der horizontalen Lage wegschwenkbar ist.

26. Kartoffelerntemaschine nach einem der Ansprüche 1 bis 25,
**dadurch gekennzeichnet, dass**
die auf der Kartoffelerntemaschine angeordneten Aufnahmebehälter mit einem, an der Funktionssektion A oder B angeordneten Ladekran (19) abnehmbar sind.
